(19) **Europäisches Patentamt European Patent Office Office européen des brevets**

(11) **EP 4 620 840 A1**

(12) **EUROPEAN PATENT APPLICATION**
published in accordance with Art. 153(4) EPC

(43) Date of publication:
**24.09.2025 Bulletin 2025/39**

(21) Application number: **22970023.2**

(22) Date of filing: **27.12.2022**

(51) International Patent Classification (IPC):
**B64U 50/33** (2023.01)     **B64C 13/18** (2006.01)
**B64U 50/11** (2023.01)

(52) Cooperative Patent Classification (CPC):
**B64C 13/18; B64U 50/11; B64U 50/33**

(86) International application number:
**PCT/JP2022/048161**

(87) International publication number:
**WO 2024/142229 (04.07.2024 Gazette 2024/27)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **Kubota Corporation**
**Osaka 556-8601 (JP)**

(72) Inventor: **SEINO, Kohei**
**Sakai-shi, Osaka 590-0908 (JP)**

(74) Representative: **Cabinet Beau de Loménie**
**103, rue de Grenelle / CS 90800**
**75340 Paris Cedex 07 (FR)**

(54) **UNMANNED AIRCRAFT**

(57)     An unmanned aerial vehicle includes: a plurality of electric motors, each driving a respective one of a plurality of first rotors included in a plurality of rotors; an internal combustion engine; an electric generator that is driven by the internal combustion engine to generate electric power; a battery that stores the electric power; and a control device that controls flight of the unmanned aerial vehicle, wherein the control device changes an upper limit of a flight altitude of the unmanned aerial vehicle according to a charging state of the battery.

*FIG. 5*

EP 4 620 840 A1

**Description**

**TECHNICAL FIELD**

The present disclosure relates to an unmanned aerial vehicle.

**BACKGROUND ART**

An unmanned aerial vehicle (UAV) is an aircraft that structurally cannot accommodate human occupants and is capable of flight through remote control or autonomous operation. A rotary-wing type unmanned aerial vehicle is a UAV that generates lift using propellers, namely rotary wings, which rotate around an axis. A small unmanned aerial vehicle equipped with multiple rotary wings (Multi-Rotor UAV) is also called a "drone", "multirotor", or "multicopter", and is widely used for applications including aerial photography, surveying, logistics, and agricultural spraying.

Patent Document 1 describes an unmanned aerial vehicle (unmanned flying body) that changes its flight position in coordination with the operation of an agricultural machine.

**CITATION LIST**

**PATENT LITERATURE**

Patent Document No. 1: Japanese Patent Application Publication No. 2022-104737

**SUMMARY OF INVENTION**

**TECHNICAL PROBLEM**

The maximum payload capacity (payload) and flight duration of unmanned aerial vehicles may be insufficient depending on the application, and further improvements are desired.

The present disclosure provides an unmanned aerial vehicle capable of increasing payload and/or flight duration.

**SOLUTION TO PROBLEM**

In an exemplary and non-limiting embodiment, the unmanned aerial vehicle of the present disclosure comprises a plurality of rotors, a plurality of electric motors each driving a respective one of a plurality of first rotors included in the plurality of rotors, an internal combustion engine, an electric generator driven by the internal combustion engine to generate electric power, a battery that stores the electric power, and a control device that controls flight of the unmanned aerial vehicle, wherein the control device changes an upper limit of a flight altitude of the unmanned aerial vehicle according to a charging state of the battery.

**ADVANTAGEOUS EFFECTS OF INVENTION**

According to embodiments of the unmanned aerial vehicle of the present disclosure, it is possible to land using power stored in the battery even in situations where electric power is not being generated by the electric generator.

**BRIEF DESCRIPTION OF DRAWINGS**

FIG. **1A** is a block diagram schematically showing several examples of rotation drive devices for rotating rotors in an unmanned aerial vehicle equipped with a plurality of rotors.
FIG. **1B** is a plan view schematically showing one example of a basic configuration of an unmanned aerial vehicle equipped with a plurality of rotors.
FIG. **1C** is a side view schematically showing one example of a basic configuration of an unmanned aerial vehicle equipped with a plurality of rotors.
FIG. **1D** is a plan view schematically showing another example of a basic configuration of an unmanned aerial vehicle equipped with a plurality of rotors.
FIG. **2A** is a block diagram showing a basic configuration example of a battery-driven multicopter.
FIG. **2B** is a block diagram showing a basic configuration example of a series hybrid type multicopter.

FIG. **2C** is a block diagram showing a basic configuration example of a parallel hybrid type multicopter.

FIG. **3** is a block diagram showing a basic configuration example of an unmanned aerial vehicle (multicopter) according to an embodiment of the present disclosure.

FIG. **4** is a diagram schematically showing a charging state of a battery.

FIG. **5** is a diagram schematically showing an example of the relationship among the state of charge (SOC) of a multicopter, maximum height MH, and flight altitude FH.

FIG. **6** is a flowchart showing an example of the operation of the control device according to the present embodiment.

FIG. **7** is a diagram schematically showing an example of correcting the upper limit of flight altitude according to the terrain directly below the multicopter in the present embodiment.

FIG. **8** is a diagram schematically showing another example of correcting the upper limit of flight altitude according to the terrain directly below the multicopter in the present embodiment.

FIG. **9** is a plan view showing an example of the positional relationship between a multicopter flying over a field and possible landing points existing around the field.

FIG. **10** is another plan view showing an example of the positional relationship between a multicopter flying over a field and possible landing points existing around the field.

FIG. **11** is yet another plan view showing an example of the positional relationship between a multicopter flying over a field and possible landing points existing around the field.

FIG. **12** is a flowchart showing another example of the operation of the control device according to the present embodiment.

FIG. **13** is a block diagram showing an example of the hardware configuration of the control device in the present embodiment.

FIG. **14** is a diagram schematically showing an example of a communication network to which the multicopter in the present embodiment is connected.

## DESCRIPTION OF EMBODIMENTS

An unmanned aerial vehicle equipped with a plurality of rotors includes a rotation drive device that rotates the rotors (hereinafter referred to as "propellers"). Hereinafter, such an unmanned aerial vehicle is referred to as a "multicopter".

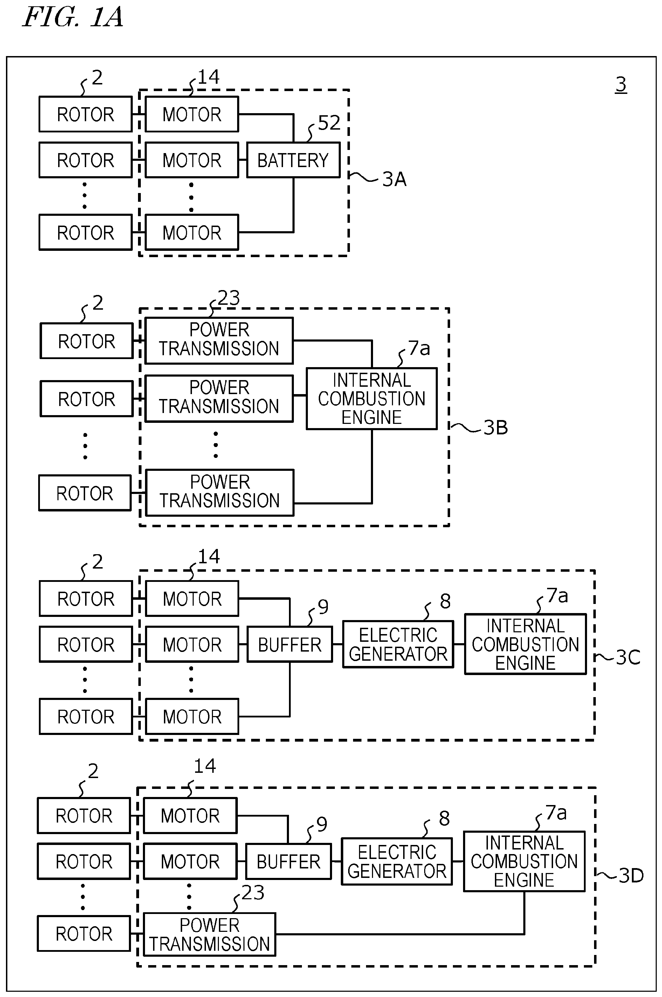

The configuration of rotation drive devices equipped in multicopters exists in various forms. FIG. **1A** is a schematic block diagram showing four examples of rotation drive device 3 in the present disclosure.

The first rotation drive device **3A** shown in FIG. **1A** includes a plurality of electric motors (hereinafter referred to as "motors") **14** that rotate a plurality of rotors **2,** and a battery **52** that stores electric power to be supplied to each motor **14.** The battery **52** is, for example, a secondary battery such as a polymer-type lithium-ion battery. Each rotor **2** is connected to the output shaft of its corresponding motor **14** and is rotated by the motor **14.** To increase payload and/or flight duration, it is necessary to increase the power storage capacity of battery **52.** While the power storage capacity of battery **52** can be increased by making battery **52** larger, enlarging battery **52** leads to an increase in weight. The second rotation drive device **3B** shown in FIG. **1A** includes a power transmission system **23** mechanically connected to rotor **2,** and an internal combustion engine **7a** that provides driving force (torque) to power transmission system **23.** The power transmission system **23** includes mechanical components such as gears or belts and transmits torque from the output shaft of internal combustion engine **7a** to rotor **2.** The internal combustion engine **7a** can efficiently generate mechanical energy through fuel combustion. Examples of internal combustion engine **7a** may include gasoline engines, diesel engines, and hydrogen engines.

The third rotation drive device **3C** shown in FIG. **1A** includes a plurality of motors **14,** a power buffer **9** that stores electric power to be supplied to each motor **14,** an electric generator **8** such as an alternator that generates electric power, and an internal combustion engine **7a** that provides mechanical energy for power generation to the electric generator **8.** While a typical example of power buffer **9** is a battery such as a secondary battery, it may also be a capacitor. In the third rotation drive device **3C,** even when the power buffer **9** does not have a large power storage capacity, it is possible to increase payload and/or flight duration because the electric generator **8** generates electric power using the driving force (mechanical energy) of internal combustion engine **7a.** This type of drive is called "series hybrid drive". The electric generator **8** and internal combustion engine **7a** in series hybrid drive are called a "range extender" as they extend the flight distance of the multicopter.

The fourth rotation drive device **3D** shown in FIG. **1A** includes a plurality of motors **14,** a power buffer **9** that stores electric power to be supplied to each motor **14,** an electric generator **8** such as an alternator that generates electric power, an internal combustion engine **7a** that provides driving force to the electric generator **8** for power generation, a power transmission system **23** that transmits driving force generated by the internal combustion engine **7a** to the rotor **2** to rotate the rotor **2.** At least one rotor **2** of the plurality of rotors **2** is rotated by the internal combustion engine **7a,** while other rotors **2** are rotated by the motor **14.** In the fourth rotation drive device **3D,** since mechanical energy generated by internal combustion engine **7a** can be utilized for rotor rotation without conversion to electrical energy, energy utilization efficiency can be enhanced. This type of drive is called "parallel hybrid drive".

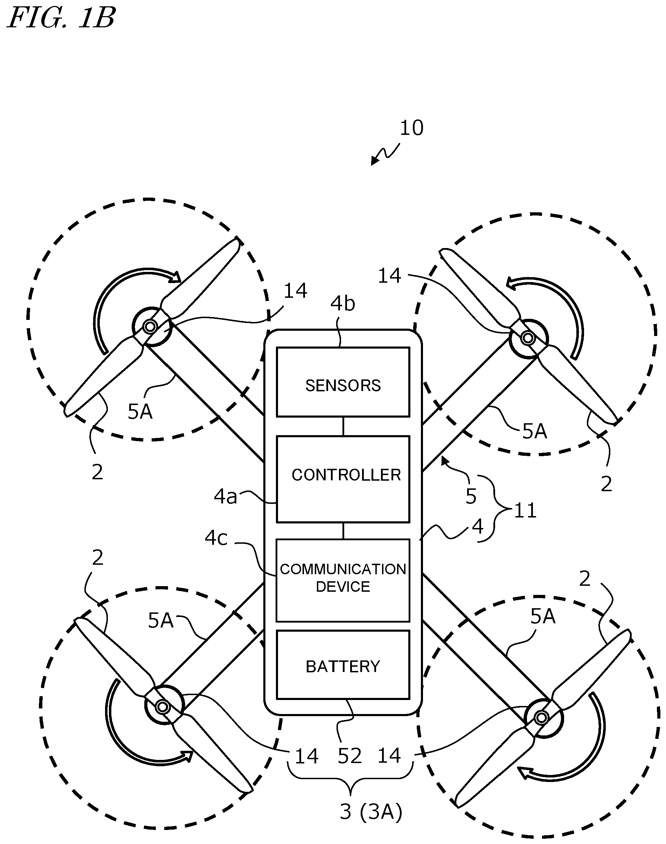

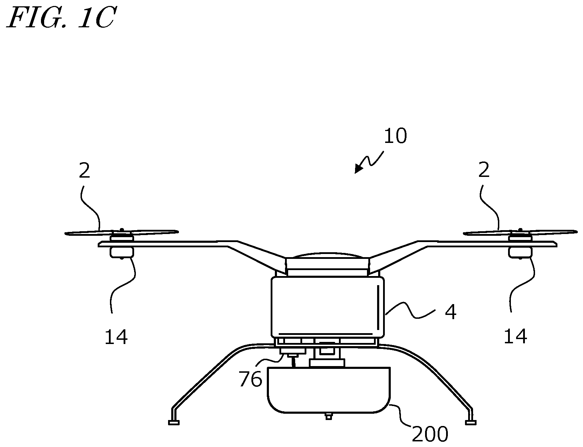

FIG. **1B** is a plan view schematically showing a basic configuration example of multicopter **10.** In the configuration example of FIG. **1B,** a rotation drive device **3** is equipped with the first rotation drive device **3A** shown in FIG. **1A.** That is, in this example, rotation drive device **3 (3A)** includes motors **14** and a battery **52.** FIG. **1C** is a side view schematically showing the multicopter **10.**

A multicopter **10** shown in Figs. **1B** and **1C** includes a plurality of rotors **2,** a main body **4,** and a body frame **5** that supports rotors **2** and main body **4.** The body frame **5** supports the main body **4** at its central portion and supports the plurality of rotors **2** rotatably at the plurality of arms **5A** extending outward from the central portion. The motors **14** that rotate rotors **2** are provided near the ends of each arm **5A.**

In the example of FIG. **1B,** the multicopter **10** is a quad-type multicopter (quadcopter) equipped with four rotors **2.** The rotors **2** positioned on the same diagonal line rotate in the same direction (clockwise or counterclockwise), while rotors **2** positioned on different diagonal lines rotate in opposite directions.

The main body **4** includes a control device **4a** that controls the operation of devices and components mounted on multicopter **10,** sensors **4b** connected to the control device **4a,** a communication device **4c** connected to the control device **4a,** and a battery **52.**

The control device **4a** may include, for example, a flight control device such as a flight controller and a higher-level computer (companion computer). The companion computer may perform advanced computational processing such as image processing, obstacle detection, and obstacle avoidance based on sensor data acquired by the sensors **4b.**

The sensors **4b** may include an acceleration sensor, angular velocity sensor, geomagnetic sensor, atmospheric pressure sensor, altitude sensor, temperature sensor, flow sensor, imaging device, laser sensor, ultrasonic sensor, obstacle contact sensor, and GNSS (Global Navigation Satellite System) receiver. The acceleration sensor and angular velocity sensor may be mounted on the main body **4** as components of an IMU (Inertial Measurement Unit). Examples of laser sensors may include a laser range finder used for measuring distance to the ground, and 2D or 3D LiDAR (light detection and ranging).

The communication device **4c** may include a wireless communication module for signal transmission and reception with a ground-based transmitter or ground control station (GCS) via an antenna, and a mobile communication module that utilizes cellular communication networks. The communication device **4c** is configured to receive signals such as control commands transmitted from the ground and transmit sensor data such as image data acquired by sensors **4b** as telemetry information. The communication device **4c** may also include functions for communication between unmanned aerial vehicles and satellite communication capabilities. The control device **4a** may connect to computers in the cloud through the communication device 4c. The cloud-based computer may execute part or all of the functions of the companion computer.

A battery **52** is a secondary battery that is configured to store electric power through charging and supply electric power to motors **14** through discharging. Through the operation of battery **52** and the plurality of motors **14,** a plurality of rotors **2** can be rotationally driven to generate desired thrust. Each of the plurality of rotors **2** generally includes a plurality of blades with fixed pitch angles and generates thrust through rotation. The pitch angles may be variable. Not all of the plurality of rotors **2** need to have the same diameter (propeller diameter), and one or more rotors **2** may have a larger diameter than other rotors **2.** The thrust (static thrust) generated by rotating the rotor **2** is generally proportional to the cube of the rotor's diameter. Therefore, when the rotors **2** of different diameters are equipped, the rotors **2** with relatively large diameters may be called "main rotors" and the rotors **2** with relatively small diameters may be called "sub-rotors". Regardless of the size of the diameter, the rotors **2** capable of generating relatively large thrust and the rotors **2** capable of generating relatively small thrust may be included depending on the configuration of rotation drive device **3.** In such case, the rotors **2** capable of generating relatively large thrust may be called "main rotors" and the rotors **2** capable of generating relatively small thrust may be called "sub-rotors". For example, the rotors **2** that generate relatively large thrust per rotation may be called "main rotors" and the rotors **2** that generate relatively small thrust per rotation may be called "sub-rotors". In one example, main rotors may be positioned more inward than sub-rotors. In other words, the rotors **2** may be positioned such that the distance from the center of the body to the rotation axis of each main rotor is shorter than the distance from the center to the rotation axis of each sub-rotor.

In this example, the rotation drive device **3** has a plurality of motors **14.** As mentioned above, the rotation drive device **3** may include the internal combustion engine **7a.**

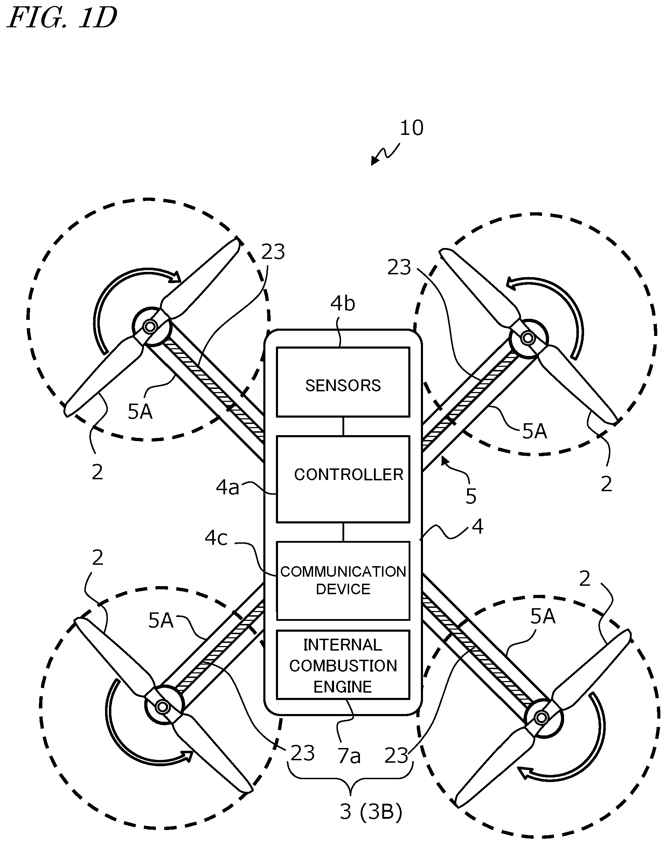

FIG. **1D** is a plan view schematically showing a basic configuration example of a multicopter **10** equipped with the second rotation drive device **3B.** In the example shown in FIG. **1D,** the internal combustion engine **7a** is supported by the main body **4.** In this example, the driving force generated by internal combustion engine **7a** is transmitted to the plurality of rotors **2** through a plurality of power transmission systems **23** to rotate each rotor **2.** The control device **4a** may change the rotational speed of individual rotors **2** by controlling each power transmission system **23.**

In a "parallel hybrid drive" where some of the plurality of rotors **2** are rotated by the internal combustion engine **7a** and other rotors **2** are rotated by the motors **14,** the internal combustion engine **7a** and battery **52** are supported by the main body **4.** At least one of the plurality of rotors **2** is connected to the internal combustion engine **7a** through the power transmission system **23,** and other rotors **2** are connected to the motors **14.**

In such a parallel hybrid drive, the diameter of one or more rotors **2** rotated by the internal combustion engine **7a** may be larger than the diameter of other rotors **2** rotated by the motors **14.** In other words, the internal combustion engine **7a** may be used for rotating the main rotors and the motors **14** may be used for rotating the sub-rotors. In such case, the main rotors are mainly used for generating thrust, and the sub-rotors are used for both generating thrust and attitude control. The main rotors may be called "booster rotors" and the sub-rotors may be called "attitude control rotors".

In the parallel hybrid drive, the internal combustion engine is used for both thrust generation and power generation. By selectively transmitting driving force (torque) generated by the internal combustion engine to either or both of the rotor and electric generator, it is possible to achieve balanced thrust generation and power generation.

When a multicopter is equipped with an internal combustion engine and uses the internal combustion engine for at least one of thrust generation and power generation, this contributes to increased payload and flight duration. It is desirable to perform attitude control of the multicopter by rotating propellers using motors, which have superior response characteristics compared to internal combustion engines. Therefore, in applications where accurate attitude control of the multicopter is required, it is desirable to adopt parallel hybrid drive or series hybrid drive to increase payload and flight duration.

Through increased payload and flight duration, the applications of multicopters can be further expanded. For example, in the agricultural field, multicopters are currently being used for agricultural chemical spraying or crop growth monitoring. Various agricultural work can be performed from the air by connecting various ground work machines (hereinafter may be simply referred to as "work machines") to the multicopter. Agricultural work machines are sometimes referred to as "implements". Examples of implements may include sprayers for spraying chemicals on crops, mowers, seeders, spreaders (fertilizer applicators), rakes, balers, harvesters, plows, harrows, or rotary tillers. Work vehicles such as tractors are not included in "implements" in this disclosure.

In the example shown in FIG. **1C,** an implement **200** capable of dispersing substances such as agricultural chemicals or fertilizers onto a field or crops in the field is connected to multicopter **10.** Increased payload and flight duration enable the implement **200** to achieve a larger size and/or multi-functionality. For example, by changing the implement **200** connected to multicopter **10,** various ground operations (agricultural work) including liquid application, granular application, fertilization, thinning, weeding, transplanting, direct seeding, and harvesting can be performed. The implement **200** may be equipped with mechanisms such as robotic hands. In that case, a single implement **200** can perform various ground operations. When the implement **200** is equipped with space large enough to store materials, the implement **200** can also transport agricultural materials or harvested crops over a wide area.

In the example shown in FIG. **1C,** the multicopter **10** is equipped with a power supply **76.** The power supply **76** is a device that supplies power to the implement **200** from driving energy sources such as a battery **52** or an electric generator **8** included in the multicopter **10.** Various functions of the implement **200** may be performed using this power. The implement **200** includes actuators such as motors that operate using power obtained from the power supply **76** of the multicopter **10.** The implement **200** preferably includes a battery for storing power.

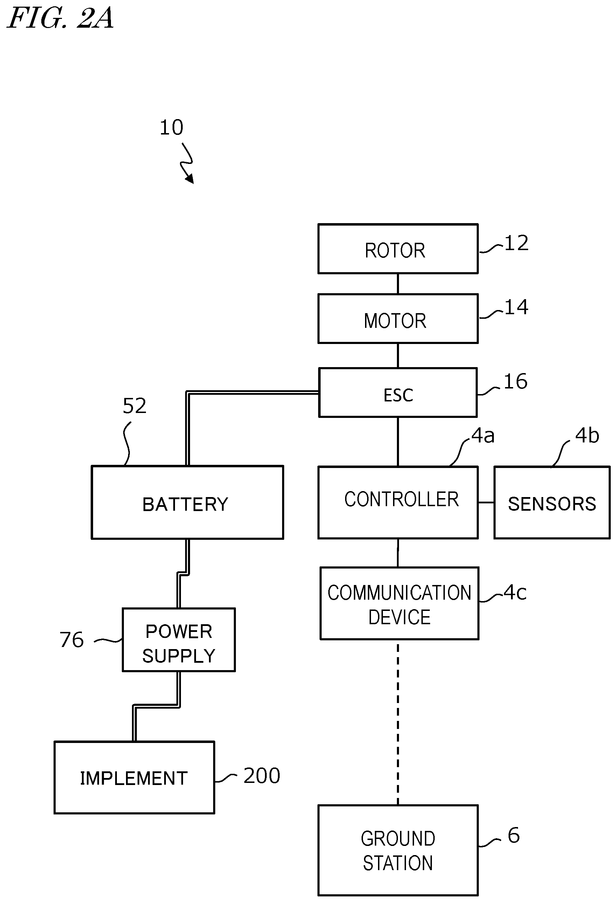

FIG. **2A** is a block diagram showing a basic configuration example of a battery-driven multicopter **10.**

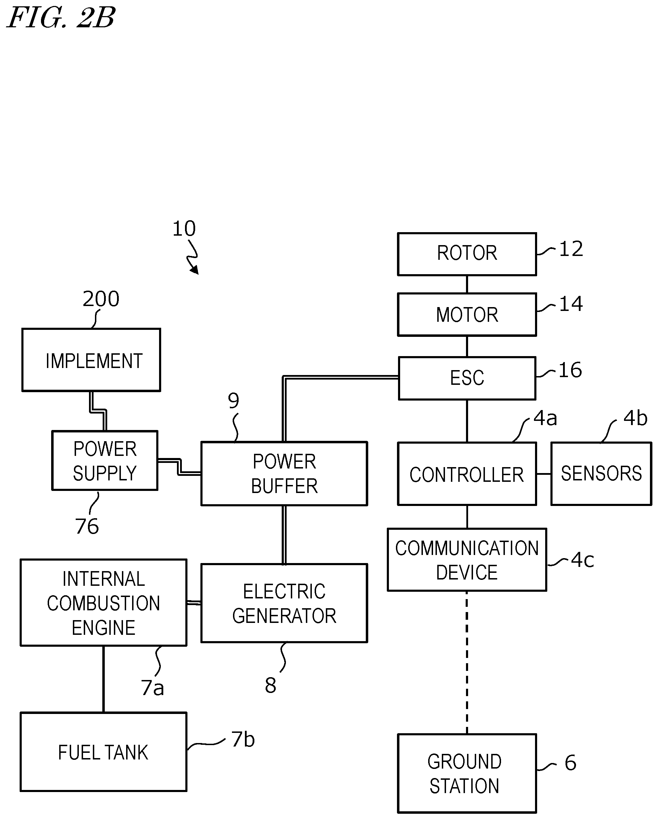

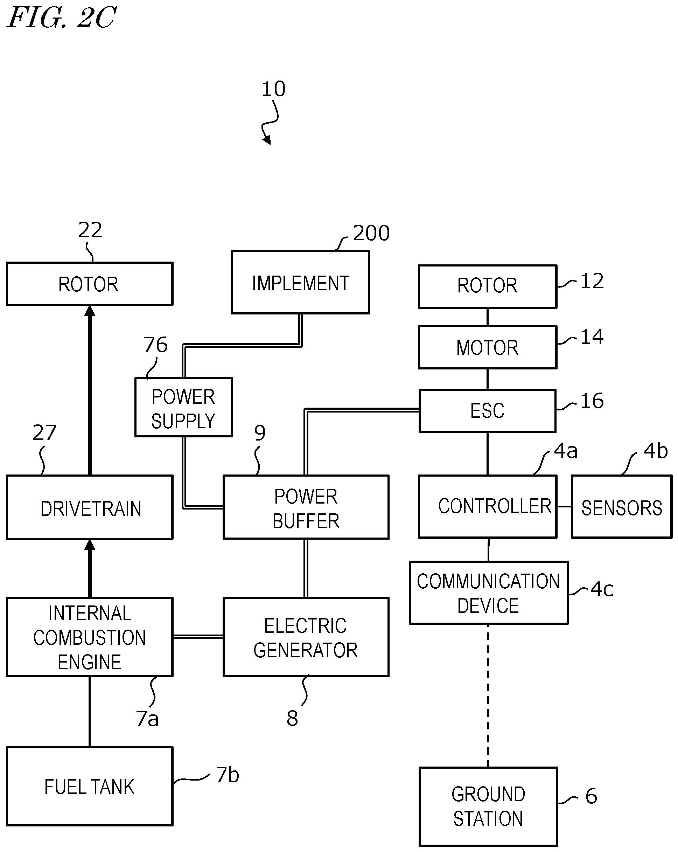

The battery-driven multicopter **10** includes a plurality of rotors **12,** a plurality of motors **14,** each driving a respective one of the plurality of rotors **12,** a plurality of ESCs (Electric Speed Controllers) **16** each including a motor drive circuit that drives a respective one of the plurality of motors **14,** a battery **52** that supplies power to each of the plurality of motors **14** through each respective ESC **16,** a control device **4a** for controlling a plurality of ESCs **16** to control attitude while flying, sensors **4b,** a communication device **4c,** and a power supply **76** that is electrically connected to the battery **52.** In FIG. **2A,** for simplicity, the rotor **12,** the motor **14,** and the ESC **16** are each shown by a single block, but the numbers of rotors **12,** motors **14,** and ESCs **16** are each plural. The same applies to Figs. **2B** and **2C.**

The control device **4a** may receive control commands wirelessly from, for example, a ground station **6** on the ground through the communication device **4c.** The number of ground stations **6** is not limited to one, and the ground station 6 may be distributed across a plurality of locations. The communication device **4c** may also wirelessly receive control commands from an operator's control device on the ground. The control device **4a** may have functions to automatically or autonomously execute takeoff, flight, obstacle avoidance, and landing operations based on sensor data obtained from the sensors **4b.** The control device **4a** may be configured to communicate with the implement **200** connected to the power supply **76** and obtain signals indicating the state of the implement **200.** Additionally, the control device **4a** may provide signals to control the operation of the implement **200.** Furthermore, the implement **200** may generate signals to instruct the operation of multicopter **10** and transmit them to the control device **4a.** Such communication between the control device **4a** and the implement **200** may be conducted through wired or wireless means.

FIG. **2B** is a block diagram showing a basic configuration example of a series hybrid drive type multicopter **10.** Like the battery-driven multicopter **10,** the series hybrid drive type multicopter **10** includes a plurality of rotors **12,** a plurality of motors **14,** a plurality of ESCs **16,** a control device **4a,** sensors **4b,** and a communication device **4c.** The series hybrid drive type multicopter **10** shown in the figure further includes an internal combustion engine **7a,** a fuel tank **7b** that stores fuel for the internal combustion engine **7a,** an electric generator **8** that is driven by the internal combustion engine **7a** to generate electric power, a power buffer **9** that temporarily stores electric power generated by the electric generator **8,** and a power supply **76** that is electrically connected to the power buffer **9.** The power buffer **9** is, for example, a battery such as a secondary battery. Electric power generated by the electric generator **8** is supplied to the motors **14** through the power buffer **9** and the ESCs **16.** Additionally, the electric power generated by the electric generator **8** may be supplied to the implement **200** through the power supply **76.**

FIG. **2C** is a block diagram showing a basic configuration example of a parallel hybrid type multicopter **10.** Like the series hybrid type multicopter **10,** the parallel hybrid type multicopter **10** includes a plurality of rotors **12,** a plurality of motors **14,** a plurality of ESCs **16,** a control device **4a,** sensors **4b,** a communication device **4c,** an internal combustion engine **7a,** a fuel tank **7b,** an electric generator **8,** a power buffer **9,** and a power supply **76.** The parallel hybrid type multicopter **10** further includes a drivetrain **27** that transmits driving force from the internal combustion engine **7a,** and a rotor **22** that rotates upon receiving driving force from the internal combustion engine **7a** through the drivetrain **27.** The rotor **12** and rotor **22** may be distinguished by calling one "first rotor" and the other "second rotor". The number of rotors **22** connected to drivetrain **27** and rotated may be one or two or more.

In the parallel hybrid type multicopter **10,** the internal combustion engine **7a** not only drives the electric generator **8** to generate power, but also mechanically transmits energy to the rotor **22** to rotate the rotor **22.** In contrast, in the series hybrid drive type multicopter **10,** all rotors **12** are rotated by electric power generated by the electric generator **8.** Therefore, in the series hybrid drive type multicopter **10,** when the electric generator 8 is, for example, a fuel cell, the internal combustion engine **7a** is not an essential component.

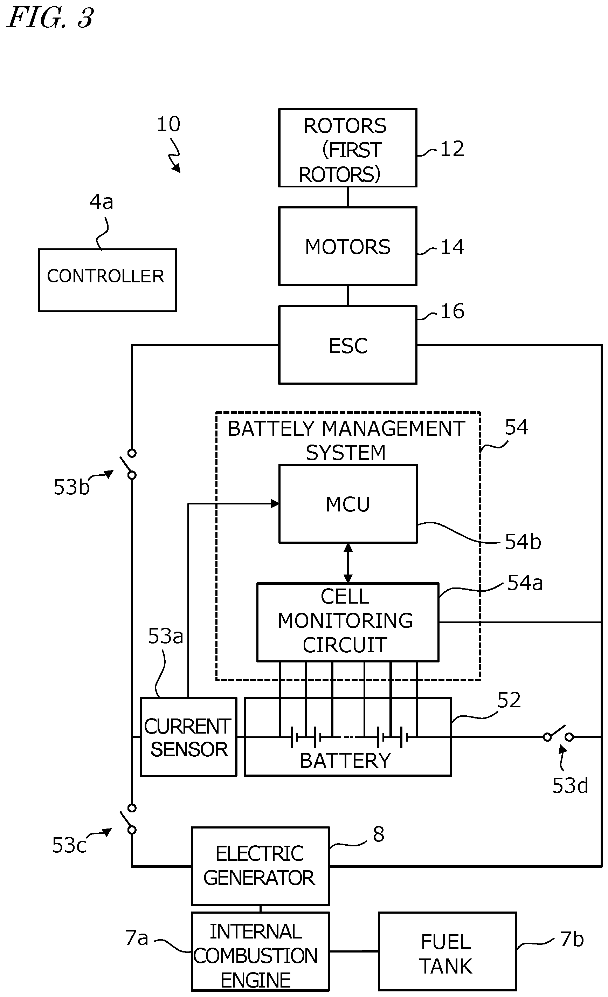

The following describes a basic configuration example of an unmanned aerial vehicle (multicopter) according to an embodiment of the present disclosure with reference to FIG. **3.**

In the example shown in FIG. **3,** the multicopter **10** broadly includes a plurality of rotors (first rotors) **12,** a plurality of motors **14** each driving a respective one of the plurality of first rotors **12,** an internal combustion engine **7a,** an electric generator **8** driven by the internal combustion engine **7a** to generate electric power, a battery **52** that stores electric power, and a control device **4a** that controls flight of the multicopter **10.** In FIG. **3,** for simplicity, the rotor **12,** the motor **14,** and the ESC **16** are each shown by a single block, but the numbers of rotors **12,** motors **14,** and ESCs **16** are each plural. Also, although not shown in FIG. **3,** the multicopter **10** may include at least one second rotor **22** driven by the internal combustion engine **7a,** as shown in FIG. **2C.** The present embodiment may adopt either "series hybrid" or "parallel hybrid" drive formats.

The multicopter **10** according to the present embodiment includes a current sensor **53a** that measures current flowing through battery **52,** and switch elements **53b, 53c, 53d** that define the current path during discharge and charge of battery **52.** During charging, current flows from the electric generator **8** to the battery **52** through the closed switch elements **53c, 53d.** During discharging, current flows from the battery **52** to the ESCs **16** and motors **14** through the closed switch elements **53b, 53d.** The multicopter **10** may further include other switch elements and/or current sensors. The opening and closing of switch elements **53b, 53c, 53d** may be controlled by the control device **4a.**

The multicopter **10** according to the present embodiment includes a battery management system **54** that monitors and manages the battery **52.** The battery management system **54** includes a cell monitoring circuit **54a** that monitors the state (voltage and temperature, etc.) of each of a plurality of single cells included in the battery **52,** and a microcontroller (Microcontroller Unit: MCU) **54b** that estimates the charging state of the battery **52** and executes battery management operations.

The cell monitoring circuit **54a** may be configured to measure the voltage of each cell and execute cell balancing during charging. The cell monitoring circuit **54a** may include a protection circuit that prevents overcharging and over-discharging of each cell. Such protection circuits may be provided in battery packs that each include a plurality of cells.

The MCU **54b** may be programmed to execute various calculations for estimating, for example, the state of charge (SOC) of the battery **52.** The state of charge (SOC) is one of the state variables that define the charging state of the battery **52.** The state variables that define the charging state of the battery **52** are not limited to the state of charge and may include variables such as the State Of Health (SOH) and Full Charge Capacity (FCC).

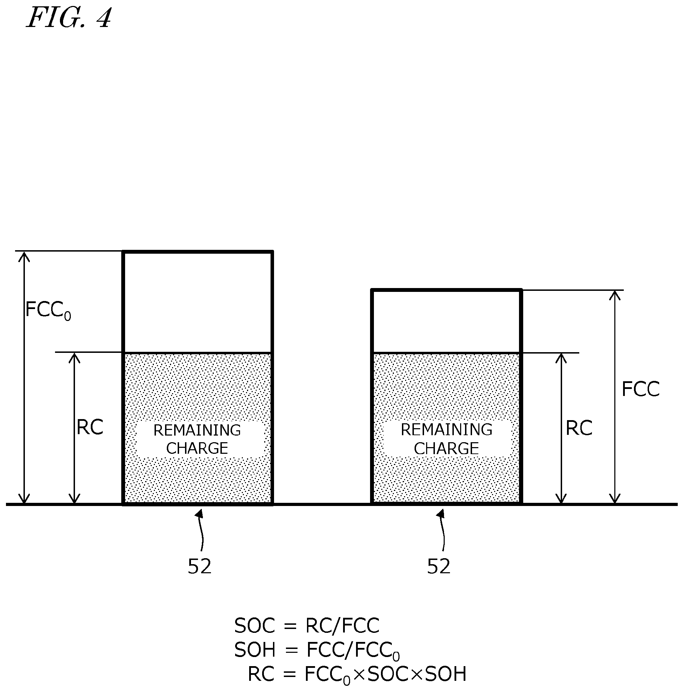

FIG. **4** is a diagram schematically showing a charging state of a battery **52.** The left portion of FIG. **4** shows the charging state of a battery **52** in its initial state, and the right portion shows the charging state of a battery **52** with a decreased full charge capacity (FCC) due to deterioration. The state of charge (SOC) is equal to the Remaining Charge (RC) of battery **52** divided by the Full Charge Capacity (FCC), that is, RC/FCC. The state of charge (SOC) defined in this way may sometimes be called "Relative SOC (RSOC)".

The State Of Health (SOH) and Full Charge Capacity (FCC) decrease as the battery **52** deteriorates. If the initial full charge capacity is denoted as $FCC_0$, the relationship between SOH and FCC is $SOH = FCC/FCC_0$. In the initial state, the SOH is 1.0.

The Remaining Charge (RC), which defines the amount of power stored in the battery 52, is equal to $SOC \times SOH \times FCC_0$. Since $FCC_0$ is known, if the estimated values of SOC and SOH are determined, RC can be calculated. The distance that can be flown using only the power stored in battery **52** depends not only on RC but also on the State Of Power (SOP), which depends on the magnitude of the current flowing through battery **52** (C-rate) and the temperature of battery **52,** among other factors. In particular, the temperature of the battery affects the distance that the multicopter **100** can fly using the power stored in the battery **52,** or the maximum height from which it can descend and land. Therefore, it is preferable for the control device **4a** to determine the maximum height based on the estimated state of charge of the battery **52** and the measured temperature of the battery **52.** Specifically, multiple tables defining the relationship between the state of charge of the battery **52** and the maximum height can be stored for different battery temperatures in, for example, a storage device included in the control device **4a.** Then, the table for the battery temperature closest to the measured temperature of the battery **52** can be selected, and the maximum height can be read from that table based on the state of charge.

After the charging state of the battery **52** (state of charge SOC, state of health SOH, battery temperature, etc.) is estimated by the battery management system **54,** the control device **4a** can perform necessary calculations based on those estimated values and calculate the possible flight time using the power of the battery **52.** The possible flight time can be calculated by dividing the amount of power stored in the battery **52** by the power consumption per unit time (power consumption) of the multicopter **100** during flight. For example, if the amount of power stored in the battery **52** is 1.5 kWh and the power consumption of the multicopter **100** during flight is 30 kW, the possible flight time is 1.5 kWh/30 kW = 0.05 h = 3 minutes. The power consumption varies depending on the multicopter **100** and also depends on the payload of the multicopter **100.** For example, in a multicopter **100** where power consumption increases by 5 kW for every 10 kg increase in payload value, if the payload value is in the range of 30-40 kg, a maximum increase in power consumption of about 5 kW $\times$ 4 = 20 kW can be expected. Taking this increase into account, the 3-minute possible flight time in the above example would be corrected to 1.5 kW/50 kW = 0.03 h = 1.8 minutes (1 minute 48 seconds).

In a preferred embodiment, the control device **4a** stores a table or function defining the relationship between power consumption and payload value.

When the control device **4a** calculates the possible flight time, it may acquire information about weather conditions including wind speed and correct the possible flight time based on that information. When the multicopter **100** flies along a predetermined path, it consumes extra power to resist the force of the wind. Therefore, power consumption increases as wind speed increases. The relationship between wind speed and power consumption can be determined in advance for each multicopter **100** and stored in the storage device of the control device **4a.** The state of charge (SOC) that defines the charging state of the battery **52** can be estimated using various algorithms. For example, the following algorithms can be adopted:

Measure the voltage (terminal voltage) of the battery **52** and estimate the state of charge (SOC) from that measured value. The measured values of the current flowing through the battery **52** and the temperature of the battery **52** are referenced in the estimation.

Integrate the current flowing through the battery **52** to determine the charge that has entered and exited the battery **52,** and obtain an estimated value of the remaining charge (RC) (Coulomb counting method).

Utilize the relationship between the Open Circuit Voltage (OCV) of the battery and the state of charge (SOC), and estimate the state of charge (SOC) from the measured values of current and voltage based on a model that includes the open circuit voltage (OCV) and battery internal impedance. Sequential Bayesian filters such as Kalman filters may be used for this estimation.

The estimation of the state of charge (SOC) is not limited to the above examples, and any method may be adopted. Also, the estimation of the state of health (SOH) and other state variables or parameters may be executed by any method/algorithm.

In the example of FIG. **3,** the battery **52** can be charged by the electric generator **8** being driven by the internal combustion engine **7a.** Therefore, in this embodiment, when estimating the possible flight time, the control device **4a** can estimate the possible flight time based on, for example, the amount of fuel consumed during 1 minute of flight and the amount of fuel stored in the fuel tank **7b** (fuel remaining). The amount of fuel consumed during 1 minute of flight may also vary depending on the payload of the multicopter **10** and weather conditions, but it can be calculated by the control device **4a** based on measured values obtained in real-time by a fuel gauge and timer mounted on the multicopter **10,** and can be updated at any time. When an implement **200** is connected to the multicopter **100,** since an appropriate implement **200** is selected from various implements according to the agricultural work, the payload may vary depending on the type or model of the implement **200.** The payload also changes when the multicopter **100** transports harvested crops or agricultural materials. Therefore, when the control device **4a** estimates the possible flight time, it is desirable for the control device **4a** to acquire information indicating additional weight separate from the weight of the multicopter **100** itself, and to use this information to improve the estimation accuracy of the possible flight time.

Consider an example where the multicopter **10** flies from its current position to a point P that is a distance X [meter] away, and then descends and lands on the ground at position P. Let the average flight speed of the multicopter **10** be Sf [meter/second], the flight altitude at position P be h [meter], and the average descent speed from the airspace above position P (altitude = h) until landing be Sd [meter/second]. In this case, the time required to fly from the current position to the airspace above position P, converted to minutes, is X/(60 $\times$ Sf). Also, the time required to descend and land from flight altitude h at position P to the ground at height 0, converted to minutes, is h/(60 × Sd). Thus, we will call the time from the current position to flying to a point X distance away and landing at that position the "flight landing time (Tfd)". The equation Tfd = X/(60 × Sf) + h/(60 × Sd) holds.

In this disclosure, if Y is the possible flight time of the multicopter **10,** the flight is controlled such that Y > Tfd holds. For example, if the distance X from the current position of the multicopter **10** to the nearest possible landing point is 1200, and Sf = 2, h = 60, Sd = 0.5, then Tfd = 1200/(60 × 2) + 60/(60 × 0.5) = 10 + 2 = 12 minutes. If the possible flight time Y of the multicopter **10** at the current position is greater than 12 minutes, it can land at a point that is distance X away from the current position.

In the embodiment of the present disclosure, the altitude h before starting the landing operation is varied according to the charging state of the battery **52,** as described later. If the altitude h changes, the time required to descend and land from the altitude h also changes. Also, even with the same altitude h, the appropriate descent speed Sd may need to be changed due to changes in weather conditions such as wind speed during landing. Therefore, for the time required for landing, instead of calculating based on various elements including altitude h, it is preferable to adopt a fixed value such as 3 minutes. Below, the flight landing time (Tfd) is expressed by the following equation (1) using the distance X and the average flight

$$\text{speed Sf. Tfd} = X/(60 \times Sf) + 3 \qquad \cdots \text{(Equation 1)}$$

In this embodiment, since the multicopter **10** is equipped with an internal combustion engine **7a** and generates power using the electric generator **8,** the possible flight time is extended compared to a battery-driven multicopter that flies only with the power initially stored in the battery **52.** Due to the internal combustion engine **7a,** it is necessary to mount a fuel tank **7b** on the multicopter **10** to store fuel, but the output energy relative to fuel weight is higher than the output energy relative to battery **52** weight. Therefore, in the embodiment of the present disclosure, it is possible to increase the possible flight time or payload by making the full charge capacity of the battery **52** relatively small to achieve weight reduction, while utilizing the internal combustion engine **7a,** fuel tank **7b,** and electric generator **8.**

In the multicopter **10** of this embodiment, the battery **52** functions as a power buffer for supplying power generated by the electric generator **8** to the motor **14,** as well as a kind of safety device in case of failure of the internal combustion engine **7a** or electric generator **8.** That is, when the internal combustion engine **7a** or electric generator **8** fails, a state occurs where the electric generator **8** cannot generate new power, but the power stored in the battery **52** can be used to rotate the motor **14** and rotor **12,** allowing the multicopter **10** to land.

In this embodiment, the full charge capacity (FCC) of the battery **52** has a size that allows the multicopter **10** to descend from a specified reference height to the ground and land using the power stored in the battery **52** when power is not being generated by the electric generator **8.** This reference height is in the range of at most 10 m to 300 m, for example, up to 200 m. It is also possible to further increase the full charge capacity (FCC) of the battery **52,** but excessive weight increase of the battery **52** is not desirable. The full charge capacity (FCC) of the battery **52** is sufficient if it is at a level that enables flight (descent) for the time required for landing (for example, 3 minutes) in a situation where the electric generator 8 cannot generate power.

However, the charging state of the battery **52** is not always at full charge (SOC = 1.0). When the battery **52** is composed of lithium-ion batteries, for example, the state of charge varies in the range 0.3 to 0.9. Since lithium-ion batteries may deteriorate due to over-discharge and overcharge, it is preferable that the state of charge (SOC) is controlled to be maintained within a predetermined range, for example, within the range of 0.5 to 0.85, by charging and discharging. Such control of charging and discharging is realized by the operation of the battery management system **54** and control device **4a** shown in FIG. 3.

Here, we explain an example where when lowering the altitude of the multicopter **10** by 2 m at a predetermined speed for landing, power is consumed by the descent operation, and the state of charge (SOC) of the battery **52** decreases by 1%. In this example, if the state of charge (SOC) at the start of descent is 100% (fully charged), it is possible to lower the altitude by 200 m. In this case, even if the flight altitude is 200 m, landing is possible with just the power stored in the battery **52.** However, if the state of charge (SOC) at the start of descent is 50%, the multicopter **10** can only lower its altitude by 100 m, and a multicopter **10** flying at an altitude exceeding 100 m would not be able to land.

To solve such a problem, in the multicopter **10** of this embodiment, the control device **4a** is configured to change the upper limit of the flight altitude of the multicopter **10** according to the charging state of the battery **52.** This point will be explained in detail below.

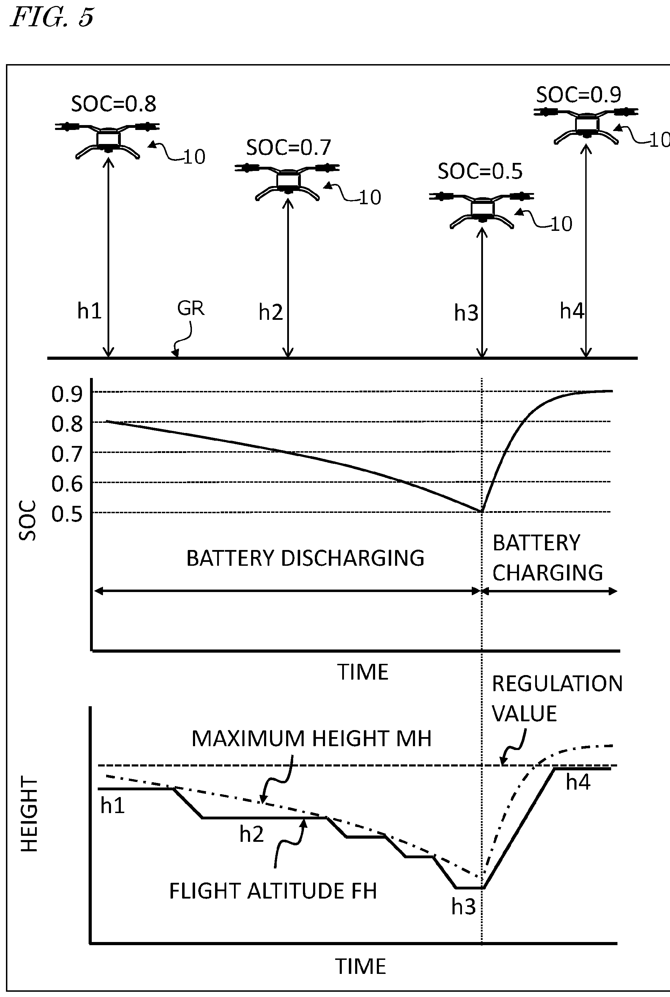

First, refer to FIG. 5. The upper part of FIG. 5 schematically shows the flight altitude of the multicopter **10** in a case where the state of charge (SOC) of the battery **52** gradually decreases from 0.8 to 0.5, and then rises to 0.9 due to charging by the electric generator **8.**

When the state of charge (SOC) is 0.8, the multicopter **10** is flying at a height h1 from the ground GR. In other words, the flight altitude (FH) at this time is h1. When the state of charge (SOC) is 0.7, the flight altitude (FH) of the multicopter **10** is h2, and when the state of charge (SOC) is 0.5, the flight altitude (FH) of the multicopter **10** is h3.

The middle part of FIG. **5** shows an example of the temporal change in the state of charge (SOC) of the battery **52.** During battery discharge, power stored in the battery **52** is consumed by the rotation of motors **14** and rotors **12,** etc., and the state of charge (SOC) gradually decreases. In contrast, during battery charging, power generated by the electric generator **8** is stored in the battery **52,** and the state of charge (SOC) increases. The battery management system **54** in this embodiment operates to charge the battery **52** with power generated by the electric generator **8** and maintain the state of charge (SOC) within a predetermined range (for example, a range of 0.5 or more to 0.9 or less).

The lower part of FIG. **5** schematically shows an example of the temporal change in the maximum height (MH) determined based on the state of charge (SOC) and the flight altitude (FH).

The control device **4a** according to this embodiment determines the maximum height (MH) to which the multicopter **10** can descend to the ground (GR) and land using the power stored in the battery **52** when power is not being generated by the electric generator **8**. The control device **4a** then controls the upper limit of the flight altitude (FH) to be at or below the maximum height (MH). In this way, the control device **4a** can change the upper limit of the flight altitude of the multicopter **10** according to the charging state of the battery **52**. The upper limit of the flight altitude (FH) only needs to be at or below the maximum height (MH) and does not need to be set to a value equal to the maximum height (MH).

There may be cases where the maximum height (MH) calculated based on the state of charge (SOC) is higher than the altitude regulation value determined by some law. In the lower part of FIG. **5,** the height of the altitude regulation value is shown by a broken line. When the maximum height (MH) is higher than the altitude regulation value, the flight altitude (FH) (shown by a dot-dash line) is limited not by the maximum height (MH) but by the altitude regulation value. In the example of FIG. **5,** the maximum height (MH) when the state of charge (SOC) reaches 0.9 exceeds the regulation value.

Note that the maximum height (MH) is preferably determined based on the remaining charge (RC) rather than the relative SOC (= RC/FCC) in a strict sense.

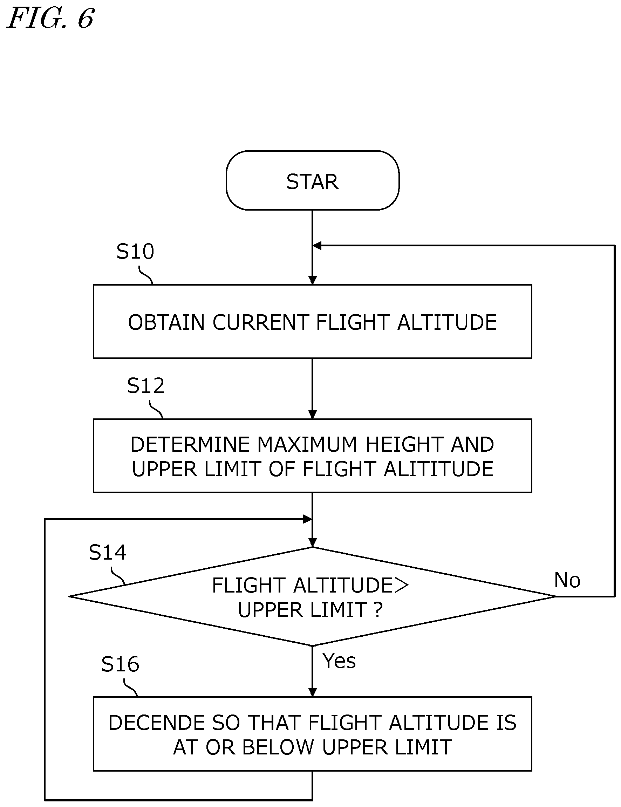

Referring to FIG. **6,** an example of the operation of the control device **4a** will be explained. FIG. **6** is a flowchart showing an example of the operation of the control device **4a**.

First, after starting the operation mode that controls the flight altitude based on the battery's charging state, in step S10, the control device **4a** obtains the current flight altitude (FH) of the multicopter **10** from an altitude sensor or the like. In step S12, the control device **4a** obtains the state of charge (SOC) (estimated value) from the battery management system **54**. At this time, the control device **4a** may also obtain other state variables that define the charging state from the battery management system **54** or other sensors. Examples of other state variables may include state of health (SOH) (estimated value) and battery temperature.

In step S12, the control device **4a** determines the maximum height (MH) based on the state of charge (SOC). For example, if it is calculated that the multicopter can descend and land on the ground from a flight altitude (FH) of 150 m when the state of charge (SOC) = 1.0, and the state of charge (SOC) obtained from the battery management system **54** is 0.8, then the maximum height (MH) is 150 × 0.8 m. If the state of health (SOH) of the battery **52** is estimated, the maximum height (MH) may be corrected by multiplying by the state of health (SOH). For example, if the full charge capacity (FCC) of the battery **52** has decreased to 0.9 times its initial value, the state of health (SOH) is 0.9, so the maximum height (MH) may be corrected to 150 × 0.8 × 0.9 m. As mentioned earlier, the power consumption required for descending a unit length may also depend on the payload and weather conditions including wind speed and air temperature. Therefore, the maximum height (HM) may be corrected based on information related to payload and weather conditions. The control device **4a** may obtain necessary information for these corrections from a memory that stores tables or functions. Note that the payload may include the weight of the multicopter **10** itself, the weight of cargo being transported by the multicopter **10,** and the weight of various machines such as implements (for example, agricultural implements) connected to the multicopter **10.**

The control device **4a** can, after obtaining the payload value by the above method, estimate the increase in power consumption according to the payload value and correct the maximum height (HM).

The control device **4a** determines the upper limit of the flight altitude (FH) in step S12 such that it does not exceed the maximum height (MH). The upper limit of the flight altitude (FH) is set, for example, within a range that does not exceed the altitude regulation value specified by law. It may also be corrected based on various information such as terrain information below the multicopter **10** during flight. This point will be described later.

The order of the processing steps S10 and S12 described above is arbitrary and they may be executed simultaneously.

Next, in step S14, the control device **4a** determines whether the flight altitude (FH) exceeds the above-mentioned upper limit. If Yes, in step S16, the multicopter **10** is descended so that the flight altitude (FH) is at or below the upper limit. If No, after a predetermined time (for example, 10 milliseconds) has elapsed, the process returns to step S10.

By the above processing, the control device **4a** is able to descend and land the multicopter **100** by driving the plurality of first rotors **12** with the power stored in the battery **52** when the internal combustion engine **7a** stops during flight.

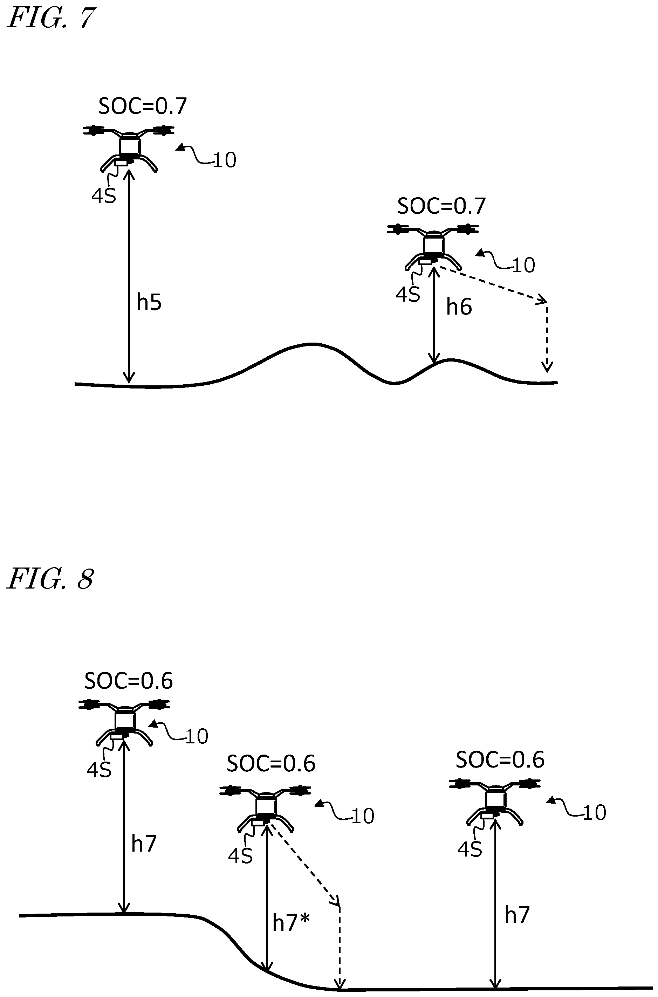

Next, with reference to FIGs. **7** and **8,** examples will be explained where the control device **4a** corrects the upper limit of the flight altitude based on the ground condition.

FIG. 7 schematically shows an example of correcting the upper limit of the flight altitude according to the terrain directly below the multicopter 10 in the case where the state of charge (SOC) = 0.7. Specifically, the upper limit is set to h5 when the terrain directly below the multicopter 10 is flat and there is a high possibility of landing safely there. When the terrain directly below the multicopter 10 is ground with a large slope value or unevenness, the upper limit is corrected to a height h6 that makes it possible to move to a flat position around it and land (move along the path of the broken arrow).

In order to detect whether the terrain directly below the multicopter 10 is ground with a large slope value or unevenness, or flat ground, it is preferable for the multicopter 100 to be equipped with a sensor 4S that monitors the condition of the ground located below the multicopter 100 during flight. The sensor 4S is a sensor included in the sensor group 4b, for example, an imaging device or a laser sensor. By using such a sensor 4S, the control device 4a is able to correct the maximum height based on the ground condition. Instead of using such a sensor 4S to monitor the ground condition, the control device 4a may obtain information about the terrain directly below the flight path from a map information of the flight area.

Now referring to FIG. 8. FIG. 8 schematically shows another example of correcting the upper limit of the flight altitude according to the terrain directly below the multicopter 10 in the case where the state of charge (SOC) = 0.6. In this example, the control device 4a is configured to adaptively correct the upper limit of the flight altitude based on terrain information. When the multicopter 10 flies over airspace above an area difficult to land such as steep slopes, the control device 4a calculates the time or power required to land on a landable flat ground ahead and lowers the multicopter 10. For example, if the upper limit of the flight altitude over flat ground is at height h7, the upper limit can be lowered to height h7* over the slope. The magnitude of height h7* is calculated so that the multicopter 10 at height h7* relative to the slope can land on the flat ground ahead.

Note that the lower limit of the flight altitude may be set so that the distance from structures on the ground is equal to or greater than a predetermined value (for example, 30 m).

The above operation relates to emergency landing in case power generation by the electric generator 8 stops. Below, an example of transitioning to an emergency "landing point movement mode" when power generation by the electric generator 8 is possible will be explained. "Landing point movement mode" is a mode for moving to a landable point using the driving force of the internal combustion engine 7a and landing there. The operation of flight and landing by this mode is automatically executed by the operation of the control device 4a.

Let the time that can be flown with the fuel loaded on the multicopter 10 and the power stored in the battery 52 be Y [minute]. On the other hand, the time required to fly to the airspace above the nearest landable point a distance X away and complete landing (flight landing time Tfd) is shown by the following equation (1), as mentioned earlier. Tfd = X/(60 × Sf) + 3 ...(Equation 1)

Here, it is assumed that the multicopter flies distance X at an average flight speed Sf and lands in 3 minutes. The 3-minute time can be set to a different value depending on the multicopter 10.

In this embodiment, the flight of the multicopter 10 is executed so that Y < Tfd does not hold. If Y = Tfd occurs with respect to the nearest landable point, if the flight continues further, the possible flight time Y will decrease, so the state may transition from Y = Tfd to Y < Tfd immediately. To avoid such a situation, when Y = Tfd occurs, it is necessary to fly from the position where Y = Tfd to the nearest landable point and land there. Therefore, in this embodiment, when Y = Tfd occurs, the work being performed is interrupted and a "landing point movement mode" is activated to fly to the nearest landable point and land there.

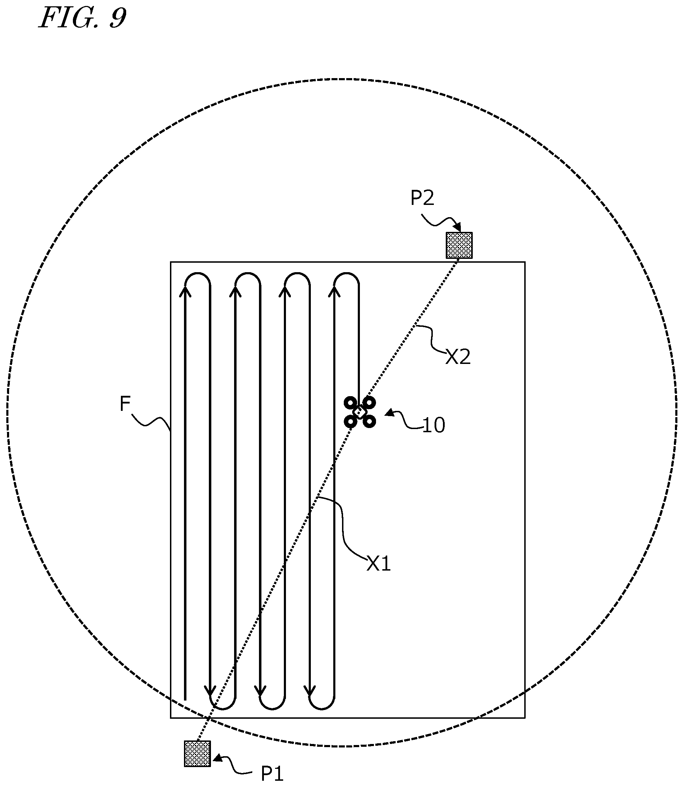

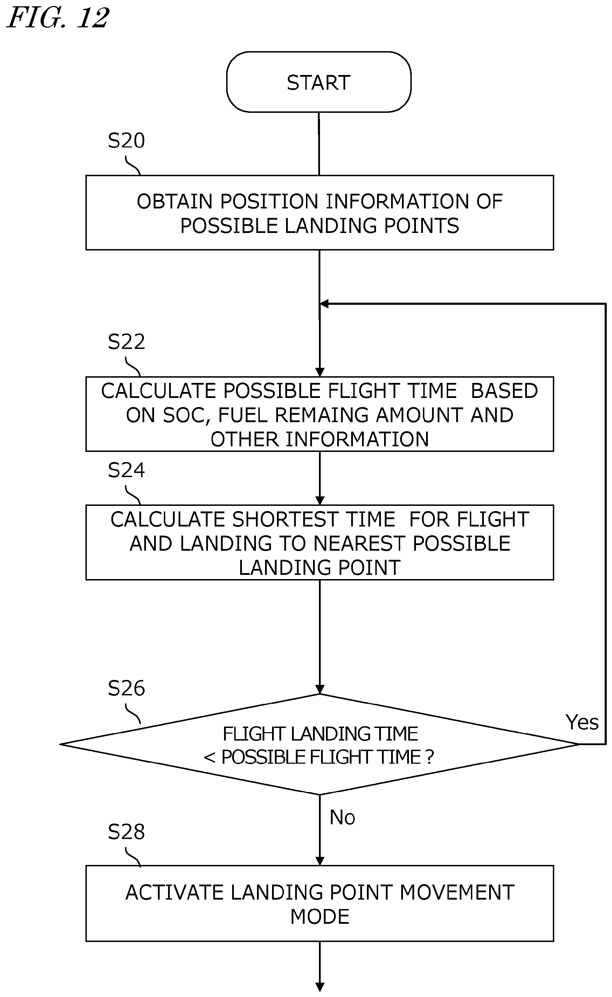

Examples of the landing point movement mode operation will be explained with reference to FIGs. 9 to 12. FIGs. 9 to 11 are plan views showing examples of the positional relationship between a multicopter 10 flying over a field F while working and possible landing points P1, P2 around the field F. FIG. 12 is a flowchart showing an example of the control device's operation for deciding to start the landing point movement mode.

First, referring to FIG. 9. The broken circle centered on the multicopter 10 shows the maximum range (Distance To Empty: DTE) that the multicopter 10 can fly with the possible flight time Y. Note that when wind is blowing in a constant direction, the maximum range that the multicopter 10 can fly with the possible flight time Y is represented not by a true circle but by an oval shape that is deformed according to the wind speed.

The multicopter 10 according to this embodiment may perform agricultural work such as agricultural chemical spraying while flying over the field F. In FIG. 9, the arrow line shown within the field F schematically shows the flight path that the multicopter 10 has passed through by autonomous driving mode. When the multicopter 10 performs agricultural work in this way, it often flies along a predetermined path above the work area such as field F. However, the work that an agricultural multicopter 10 can perform is not limited to such examples and may include work performed over a wide area including multiple fields, such as the supply and transport of agricultural materials, transport of harvested crops, monitoring of crop growth conditions, surveying, and map creation. Note that when the multicopter 10 transports agricultural materials or harvested crops, for example, the multicopter 10 may fly automatically or autonomously, or by remote control, over airspace of areas other than fields (including areas such as forests and rivers).

In the example of FIG. 9, there is a first possible landing point P1 at a distance X1 from the multicopter 10, and a second possible landing point P2 at a distance X2 from the multicopter 10. Distances X1 and X2 change depending on the position of the multicopter **10.** Also, since the possible flight time Y decreases while the multicopter **10** is flying, the radius of the broken circle decreases with the passage of time. For simplicity, the figure shows the lines defining distances X1 and X2 as dotted straight lines, but the lines defining distances X1 and X2 may include curves. The multicopter **10** may need to fly along a path including curves to reach a landable point, for example, when it is required to fly around a no-fly zone or structures such as towers. In such a case, the distance is calculated along such a path.

In the example of FIG. **9,** the time (flight landing time $Tfd_2$) to fly from the current position of the multicopter **10** to the second possible landing point P2 and land is shorter than the time (flight landing time $Tfd_1$) to fly to the first possible landing point P1 and land. In other words, the possible landing point closest to the current position of the multicopter **10** is the second possible landing point P2. And in the example of FIG. **9,** $Y > Tfd_2$ holds. That is, the possible flight time Y is longer than the flight landing time $Tfd_2$ to the second possible landing point P2, which is the shortest distance from the current position of the multicopter **10.** Therefore, the multicopter **10** continues flying and working.

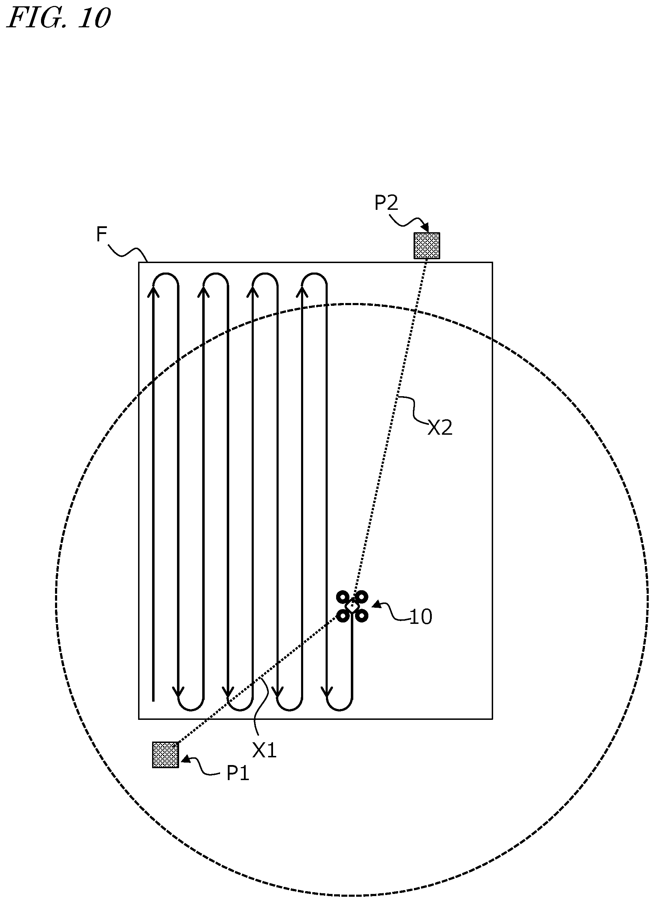

Next, referring to FIG. **10.** FIG. **10** schematically shows the state after the multicopter **10,** which was at the position in FIG. **9,** has continued flying and working. In the example of FIG. **10,** the time (flight landing time $Tfd_1$) to fly from the current position of the multicopter **10** to the first possible landing point P1 and land is shorter than the time (flight landing time $Tfd_2$) to fly to the second possible landing point P2 and land, and $Y > Tfd_1$ holds. Therefore, the multicopter **10** continues flying and working.

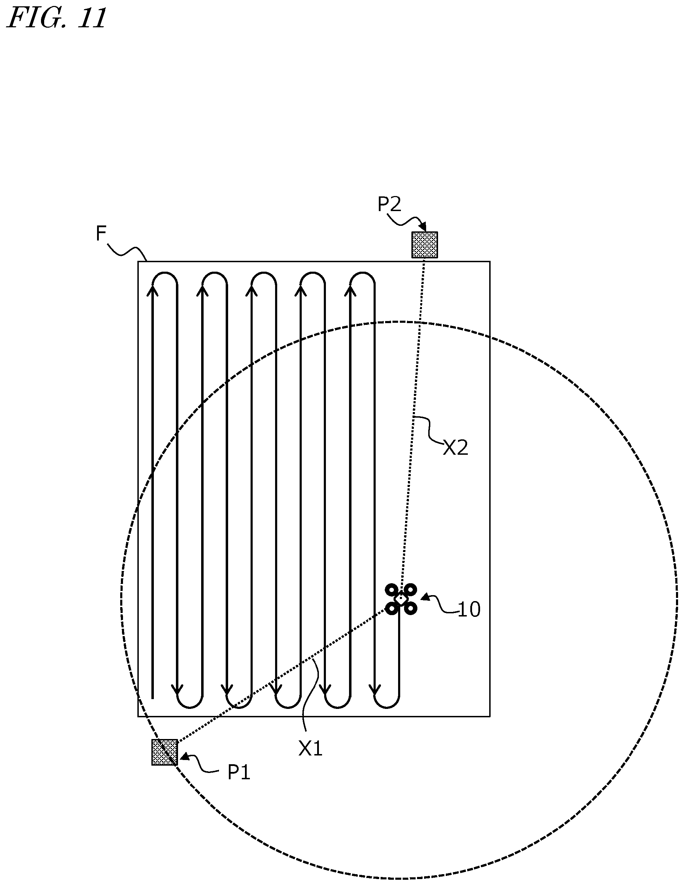

Next, referring to FIG. **11.** FIG. **11** schematically shows the state after the multicopter **10,** which was at the position in FIG. **10,** has continued flying and working. In the example of FIG. **11,** the time (flight landing time $Tfd_1$) to fly from the current position of the multicopter **10** to the first possible landing point P1 and land is shorter than the time (flight landing time $Tfd_2$) to fly to the second possible landing point P2 and land, and $Y = Tfd_1$ holds. Therefore, the multicopter **10** interrupts the work and activates the "landing point movement mode". Specifically, it flies from the current position of the multicopter **10** shown in FIG. **11** toward the first possible landing point P1. After reaching the airspace above the first possible landing point P1, the multicopter **10** starts the landing operation and lands at the first possible landing point P1. In this example, the multicopter **10** that has landed at the first possible landing point P1 has consumed almost all the fuel stored in the fuel tank **7b** and the power stored in the battery **52.**

The number of possible landing points is not limited to two; there may be one or three or more. Also, the possible landing points need not be narrow sites in the form of spots, but may spread out as surfaces or bands. Each possible landing point may be a wide area where multiple multicopters **10** can land simultaneously. Some or all of the possible landing points may be equipped with facilities capable of supplying fuel or power to the multicopter **10.** The possible landing points may be equipped with wireless communication devices or beacons, and configured to transmit or broadcast various information, including the position information of the possible landing points, to multicopters **10** flying in the vicinity. One of the possible landing points may be the starting point of flight.

Next, the operational flow will be explained with reference to FIG. **12.**

First, after the control device **4a** of the multicopter **10** starts operation (after startup), in step S20, it obtains position information of possible landing points. Examples of position information are not limited to position information in a geographical coordinate system, but may be position coordinates on a surrounding environment map. The position information of possible landing points may be updated during flight.

In step S22, the control device **4a** obtains the state of charge from the battery management system **54.** The control device **4a** also obtains fuel remaining amount and other information from the sensor group. Examples of "other information" may include various information that is effective for determining the possible flight time Y, such as battery temperature, air temperature, humidity, wind speed, and payload. The control device **4a** calculates (or estimates) the possible flight time Y based on these values.

In step S24, the control device **4a** determines the distance X from the current position to a possible landing point. If there are two or more possible landing points, the distance X is determined for each of the multiple possible landing points. The control device **4a** calculates the shortest time (flight landing time Tfd) required for flight and landing to the nearest possible landing point based on the shortest distance X.

In step S26, the flight landing time Tfd is compared with the possible flight time Y, and if the possible flight time Y is longer than the flight landing time Tfd (Yes), the process returns to step S22. If the possible flight time Y is no longer longer than the flight landing time Tfd (No), in other words, if Tfd = Y, the process proceeds to step S28, interrupts the work, and activates the landing point movement mode.

After activating the landing point movement mode, it is preferable for the multicopter **10** to notify the user, operator, or manager of the multicopter **10** that it is flying in the landing point movement mode and the position information of the target possible landing point.

Thus, according to this embodiment, when the multicopter **10** is about to run out of fuel, it can automatically fly to a predetermined possible landing point and land at a known location. There are multicopters that fly in a "return-to-home" mode to return to the departure point in cases such as when communication is lost. Such multicopters can only fly within a predetermined distance range from the departure point. However, according to this embodiment, by preparing landable points in advance, it is possible to expand the flight range while allowing the multicopter to land in a location from which it can be easily retrieved. Also, when the multicopter **10** lands, it has almost no fuel left, allowing for effective utilization of fuel until the time of retrieval.

The control device **4a** in the embodiment of the present disclosure may be realized by a digital computer system programmed to execute each process explained with reference to FIGs. **6** and **12.**

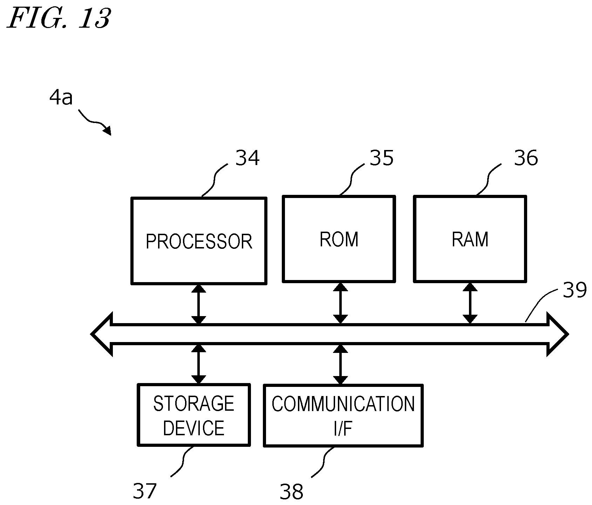

FIG. **13** is a block diagram showing an example of the hardware configuration of the control device **4a.** The control device **4a** includes a processor **34,** ROM (Read Only Memory) **35,** RAM (Random Access Memory) **36,** storage device **37,** and communication I/F **38.** These components are interconnected via a bus **39.**

The processor **34** is one or more semiconductor integrated circuits, also referred to as a central processing unit (CPU) or microprocessor. The processor **34** sequentially executes computer programs stored in ROM **35** to implement the aforementioned processing. The term processor **34** is broadly interpreted to encompass devices such as FPGA (Field Programmable Gate Array) with CPU, GPU (Graphic Processor Unit), ASIC (Application Specific Integrated Circuit), or ASSP (Application Specific Standard Product).

The ROM **35** is, for example, a writable memory (for example, PROM), rewritable memory (for example, flash memory), or read-only memory. The ROM **35** stores programs that control the operation of the processor. The ROM **35** need not be a single recording medium but may be a collection of a plurality of recording media. Part of the plurality of collections may be removable memory.

The RAM **36** provides a work area for temporarily expanding programs stored in the ROM **35** during boot-up. The RAM **36** need not be a single recording medium but may be a collection of a plurality of recording media.

The communication I/F **38** is an interface for communication between the control device **4a** and other electronic components or electronic control units (ECUs). For example, the communication I/F **38** may perform wired communication complying with various protocols. The communication I/F **38** may perform wireless communication complying with Bluetooth® standards and/or Wi-Fi® standards. Both standards include wireless communication standards utilizing the 2.4 GHz frequency band.

The storage device **37** may be, for example, a semiconductor memory, magnetic storage device, or optical storage device, or a combination thereof. The storage device **37** is configured to store, for example, map data useful for autonomous flight of the multicopter **10,** and various sensor data acquired by the multicopter **10** during flight.

Note that, as mentioned earlier, the control device **4a** may include, as separate components, a flight control device such as the flight controller and an upper-level computer (companion computer). The companion computer may execute each of the processes shown in FIGs. **6** and **12** and provide flight-related commands to the flight controller based on the results of those processes.

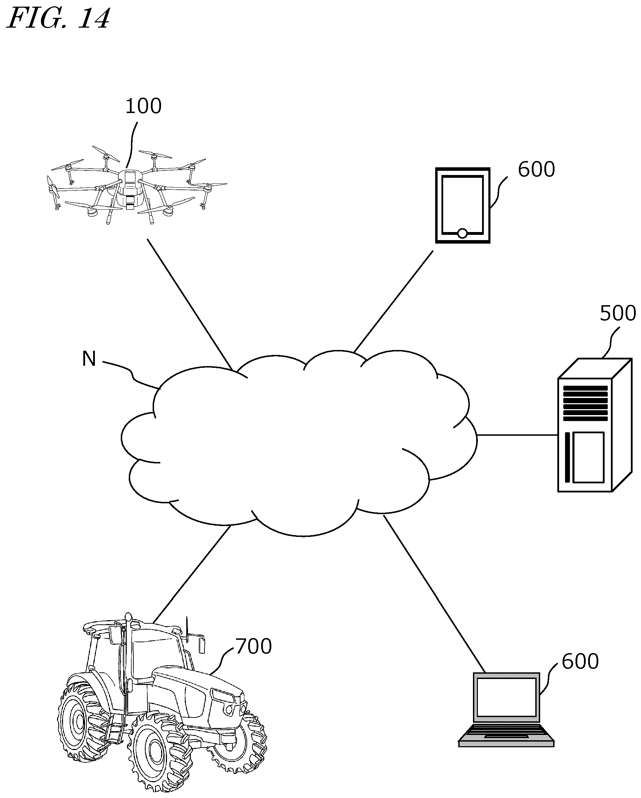

Additionally, one or more servers (computers) **500** or terminal devices (including portable and fixed types) **600** connected to the communication device **4c** of the multicopter **100** via a communication network **N,** as shown in FIG. **14,** may execute part or all of the functions of the control device 4a. The agricultural machine **700** such as tractors may be connected to this communication network **N,** and communication may be performed between the multicopter **100** and the agricultural machine **700.** Through the communication network **N,** part of the data used for processing by the control device **4a** and control signals for the multicopter **100** may be provided to the multicopter **100** from the agricultural machine **700.**

This specification discloses the solution means described in the following items.

[Item 1]

An unmanned aerial vehicle comprising a plurality of rotors, the unmanned aerial vehicle comprising:

a plurality of electric motors, each driving a respective one of a plurality of first rotors included in the plurality of rotors;
an internal combustion engine;
an electric generator that is driven by the internal combustion engine to generate electric power;
a battery that stores the electric power; and
a control device that controls flight of the unmanned aerial vehicle, wherein the control device changes an upper limit of a flight altitude of the unmanned aerial vehicle according to a charging state of the battery.

[Item 2]

The unmanned aerial vehicle according to Item 1, wherein the control device determines a maximum height to which the unmanned aerial vehicle can descend to the ground and land using the power stored in the battery when power is not being generated by the electric generator, and controls the upper limit of the flight altitude to be at or below the maximum height.

[Item 3]

The unmanned aerial vehicle according to Item 2, further comprising: a battery management system that monitors the battery, wherein the battery management system estimates a state of charge that defines the charging state.

[Item 4]

The unmanned aerial vehicle according to Item 3, wherein the battery management system charges the battery with the power generated by the electric generator and maintains the state of charge within a predetermined range.

[Item 5]

The unmanned aerial vehicle according to Item 3, wherein the battery management system measures a temperature of the battery, and wherein the control device determines the maximum height based on the estimated value of the state of charge of the battery and the measured value of the temperature.

[Item 6]

The unmanned aerial vehicle according to Item 5, wherein the control device obtains a payload value of the unmanned aerial vehicle, and corrects the maximum height based on the payload value.

[Item 7]

The unmanned aerial vehicle according to any one of Items 1 to 6, wherein the plurality of rotors includes at least one second rotor driven by the internal combustion engine.

[Item 8]

The unmanned aerial vehicle according to any one of Items 1 to 7, wherein the full charge capacity of the battery has a size that allows the unmanned aerial vehicle to descend from a predetermined reference height to the ground and land using the power stored in the battery when power is not being generated by the electric generator.

[Item 9]

The unmanned aerial vehicle according to Item 8, wherein the reference height is 10 m or more and 300 m or less.

[Item 10]

The unmanned aerial vehicle according to Item 9, wherein the reference height is 200 m or less.

[Item 11]

The unmanned aerial vehicle according to any one of Items 1 to 10, wherein the control device, when the internal combustion engine stops during flight, descends and lands the unmanned aerial vehicle while driving the plurality of first rotors using the power stored in the battery.

[Item 12]

The unmanned aerial vehicle according to any one of Items 1 to 11, further comprising: a sensor that monitors a condition of the ground located below the unmanned aerial vehicle during flight, wherein the control device corrects the maximum height based on the ground condition.

[Item 13]

The unmanned aerial vehicle according to any one of Items 1 to 12, wherein the control device acquires information related to weather conditions including wind speed and corrects the maximum height based on the information.

[Item 14]

The unmanned aerial vehicle according to any one of Items 1 to 13, wherein the control device is configured to: obtain position information of one or more possible landing points; determine a distance from a current position of the unmanned aerial vehicle to a nearest possible landing point, and based on the distance, determine a flight landing time required for flight and landing to the nearest possible landing point; calculate a possible flight time of the unmanned aerial vehicle; and start an operation for flight and landing to the nearest possible landing point when a predetermined relationship is satisfied between the possible flight time and the flight landing time.

[Item 15]

An unmanned aerial vehicle comprising a plurality of rotors, the unmanned aerial vehicle comprising: a battery; and a control device that controls flight of the unmanned aerial vehicle, wherein the control device changes an upper limit of a flight altitude of the unmanned aerial vehicle according to a charging state of the battery.

[Item 16]

A control method for an unmanned aerial vehicle equipped with a plurality of rotors, the method comprising: estimating a charging state of a battery equipped in the unmanned aerial vehicle; and changing an upper limit of a flight altitude of the unmanned aerial vehicle according to the charging state.

[Item 17]

An unmanned aerial vehicle comprising a plurality of rotors, the unmanned aerial vehicle comprising: a control device that controls flight of the unmanned aerial vehicle, wherein the control device:

determines a distance from a current position of the unmanned aerial vehicle to a nearest possible landing point, and based on the distance,
determines a flight landing time required for flight and landing to the nearest possible landing point;
calculates a possible flight time of the unmanned aerial vehicle; and starts an operation for flight and landing to the nearest possible landing point when a predetermined relationship is satisfied between the possible flight time and the flight landing time.

[Item 18]

A control method for an unmanned aerial vehicle equipped with a plurality of rotors, the method comprising:

determining a distance from a current position of the unmanned aerial vehicle to a nearest possible landing point, and based on the distance,
determining a flight landing time required for flight and landing to the nearest possible landing point;
calculating a possible flight time of the unmanned aerial vehicle; and
starting an operation for flight and landing to the nearest possible landing point when a predetermined relationship is satisfied between the possible flight time and the flight landing time.

## INDUSTRIAL APPLICABILITY

The unmanned aerial vehicle according to the present disclosure may be widely utilized not only for aerial photography, surveying, logistics, and agricultural chemical spraying applications but also for ground work related to agriculture, transportation of harvested crops and agricultural materials.

## REFERENCE SIGNS LIST

**2...** rotor (propeller), **3**...rotation drive device, **4**...main body, **4a**...control device, **4b**...sensors, **4c**...communication device, **5**...body frame, **10**...multicopter, **12**...sub-rotor, **12a**...propeller, **12b**...propeller, **14**...motor, **16**...ESC, **22**...main rotor, **52**...battery, **54**...battery management system

**Claims**

1. An unmanned aerial vehicle comprising a plurality of rotors, the unmanned aerial vehicle comprising:

   a plurality of electric motors, each driving a respective one of a plurality of first rotors included in the plurality of rotors;
   an internal combustion engine;
   an electric generator to be driven by the internal combustion engine to generate electric power;
   a battery to store the electric power; and
   a control device configured to control flight of the unmanned aerial vehicle, wherein the control device is configured to change an upper limit of a flight altitude of the unmanned aerial vehicle according to a charging state of the battery.

2. The unmanned aerial vehicle according to Claim 1, wherein the control device configured to determine a maximum height to which the unmanned aerial vehicle can descend to the ground and land using the power stored in the battery when power is not being generated by the electric generator, and to control the upper limit of the flight altitude to be at or below the maximum height.

3. The unmanned aerial vehicle according to Claim 2, further comprising:
   a battery management system to monitor the battery, wherein the battery management system is configured to estimate a state of charge that defines the charging state.

4. The unmanned aerial vehicle according to Claim 3, wherein the battery management system is configured to charge the battery with the power generated by the electric generator and maintain the state of charge within a predetermined range.

5. The unmanned aerial vehicle according to Claim 3, wherein the battery management system is configured to measure a temperature of the battery, and wherein the control device is configured to determine the maximum height based on the estimated value of the state of charge of the battery and the measured value of the temperature.

6. The unmanned aerial vehicle according to Claim 5, wherein the control device is configured to obtain a payload value of the unmanned aerial vehicle, and correct the maximum height based on the payload value.

7. The unmanned aerial vehicle according to any one of Claims 1 to 6, wherein the plurality of rotors includes at least one second rotor driven by the internal combustion engine.

8. The unmanned aerial vehicle according to any one of Claims 1 to 7, wherein the full charge capacity of the battery has a size that allows the unmanned aerial vehicle to descend from a predetermined reference height to the ground and land using the power stored in the battery when power is not being generated by the electric generator.

9. The unmanned aerial vehicle according to Claim 8, wherein the reference height is 10 m or more and 300 m or less.

10. The unmanned aerial vehicle according to Claim 9, wherein the reference height is 200 m or less.

11. The unmanned aerial vehicle according to any one of Claims 1 to 10, wherein the control device, when the internal combustion engine stops during flight, descends and lands the unmanned aerial vehicle while driving the plurality of first rotors using the power stored in the battery.

12. The unmanned aerial vehicle according to any one of Claims 1 to 11, further comprising: a sensor that monitors a condition of the ground located below the unmanned aerial vehicle during flight, wherein the control device corrects the maximum height based on the ground condition.

13. The unmanned aerial vehicle according to any one of Claims 1 to 12, wherein the control device acquires information related to weather conditions including wind speed and corrects the maximum height based on the information.

14. The unmanned aerial vehicle according to any one of Claims 1 to 13, wherein the control device is configured to:

    obtain position information of one or more possible landing points;

determine a distance from a current position of the unmanned aerial vehicle to a nearest possible landing point, and based on the distance,
determine a flight landing time required for flight and landing to the nearest possible landing point;
calculate a possible flight time of the unmanned aerial vehicle; and
start an operation for flight and landing to the nearest possible landing point when a predetermined relationship is satisfied between the possible flight time and the flight landing time.

FIG. 1A

## FIG. 1B

SENSORS

CONTROLLER

COMMUNICATION
DEVICE

BATTERY

FIG. 1C

FIG. 1D

SENSORS

CONTROLLER

COMMUNICATION DEVICE

INTERNAL COMBUSTION ENGINE

3 (3B)

## FIG. 2A

10

ROTOR 12

MOTOR 14

ESC 16

52

BATTERY

CONTROLLER 4a

SENSORS 4b

COMMUNICATION DEVICE 4c

76 POWER SUPPLY

IMPLEMENT 200

GROUND STATION 6

*FIG. 2B*

*FIG. 2C*

*FIG. 3*

*FIG. 4*

$$SOC = RC/FCC$$
$$SOH = FCC/FCC_0$$
$$RC = FCC_0 \times SOC \times SOH$$

## FIG. 5

*FIG. 6*

```
                        ┌─────────────┐
                        │    STAR     │
                        └──────┬──────┘
                               │
   S10                         ▼
        ┌──────────────────────────────────────────┐
        │      OBTAIN CURRENT FLIGHT ALTITUDE       │
        └──────────────────┬───────────────────────┘
                           │
   S12                     ▼
        ┌──────────────────────────────────────────┐
        │    DETERMINE MAXIMUM HEIGHT AND           │
        │    UPPER LIMIT OF FLIGHT ALITITUDE        │
        └──────────────────┬───────────────────────┘
                           │
                           ▼
   S14              ◇─────────────────◇        No
              ◇      FLIGHT ALTITUDE>      ◇──────────
         ◇           UPPER LIMIT ?             ◇
              ◇                          ◇
                    ◇──────┬──────◇
                           │ Yes
   S16                     ▼
        ┌──────────────────────────────────────────┐
        │   DECENDE SO THAT FLIGHT ALTITUDE IS      │
        │       AT OR BELOW UPPER LIMIT             │
        └──────────────────────────────────────────┘
```

*FIG. 7*

*FIG. 8*

*FIG. 9*

*FIG. 10*

*FIG. 11*

## FIG. 12

```
                        ┌─────────────┐
                        │    START    │
                        └─────────────┘
                               │
   S20                         ▼
   ┌───────────────────────────────────────────────┐
   │       OBTAIN POSITION INFORMATION OF           │
   │          POSSIBLE LANDING POINTS               │
   └───────────────────────────────────────────────┘
                               │
                               ▼
   S22
   ┌───────────────────────────────────────────────┐
   │   CALCULATE POSSIBLE FLIGHT TIME  BASED        │
   │    ON SOC, FUEL REMAING AMOUNT AND             │
   │           OTHER INFORMATION                    │
   └───────────────────────────────────────────────┘
   S24
   ┌───────────────────────────────────────────────┐
   │   CALCULATE SHORTEST TIME  FOR FLIGHT          │
   │   AND LANDING TO NEAREST POSSIBLE              │
   │              LANDING POINT                     │
   └───────────────────────────────────────────────┘
                               │
   S26                         ▼
          ◇─────────────────────────────────────◇   Yes
          │      FLIGHT LANDING TIME             │─────►
          │    < POSSIBLE FLIGHT TIME ?          │
          ◇─────────────────────────────────────◇
                               │ No
   S28                         ▼
   ┌───────────────────────────────────────────────┐
   │     ACTIVATE LANDING POINT MOVEMENT            │
   │                 MODE                           │
   └───────────────────────────────────────────────┘
                               │
                               ▼
```

*FIG. 13*

4a

| PROCESSOR | ROM | RAM |
|:---:|:---:|:---:|
| 34 | 35 | 36 |

39

| STORAGE DEVICE | COMMUNICATION I/F |
|:---:|:---:|
| 37 | 38 |

## FIG. 14

## INTERNATIONAL SEARCH REPORT

| International application No. |
|---|
| **PCT/JP2022/048161** |

### A. CLASSIFICATION OF SUBJECT MATTER

*B64U 50/33*(2023.01)i; *B64C 13/18*(2006.01)i; *B64U 50/11*(2023.01)i
FI: B64U50/33; B64C13/18 G; B64U50/11

According to International Patent Classification (IPC) or to both national classification and IPC

### B. FIELDS SEARCHED

Minimum documentation searched (classification system followed by classification symbols)

B64U50/33; B64C13/18; B64U50/11

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| X | JP 2020-138594 A (AISAN IND. CO., LTD.) 03 September 2020 (2020-09-03) paragraphs [0021]-[0119], fig. 1-17 | 1, 8-11 |
| Y | | 7, 12-14 |
| A | | 2-6 |
| Y | JP 2021-167198 A (ISHIKAWA ENERGY RES CO LTD) 21 October 2021 (2021-10-21) paragraphs [0015]-[0041], fig. 1-2 | 7 |
| Y | JP 2018-165870 A (SUBARU CORP) 25 October 2018 (2018-10-25) paragraphs [0018]-[0044], fig. 1-6 | 12-14 |
| A | JP 2016-531042 A (SZ DJI TECHNOLOGY CO., LTD.) 06 October 2016 (2016-10-06) | 1-14 |
| A | US 2016/0167799 A1 (AIRBUS GROUP SAS) 16 June 2016 (2016-06-16) | 1-14 |

☐ Further documents are listed in the continuation of Box C.  ☑ See patent family annex.

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **21 February 2023** | **07 March 2023** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

35

**INTERNATIONAL SEARCH REPORT**
Information on patent family members

International application No.

**PCT/JP2022/048161**

| Patent document cited in search report | | | Publication date (day/month/year) | Patent family member(s) | | | Publication date (day/month/year) |
|---|---|---|---|---|---|---|---|
| JP | 2020-138594 | A | 03 September 2020 | (Family: none) | | | |
| JP | 2021-167198 | A | 21 October 2021 | JP | 2020-73379 | A | |
| JP | 2018-165870 | A | 25 October 2018 | US paragraphs [0016]-[0079], fig. 1-6 | 2018/0286256 | A1 | |
| JP | 2016-531042 | A | 06 October 2016 | US | 2017/0123420 | A1 | |
| | | | | WO | 2016/008125 | A1 | |
| | | | | EP | 3196125 | A1 | |
| US | 2016/0167799 | A1 | 16 June 2016 | EP | 3034834 | A1 | |
| | | | | CN | 105691608 | A | |

Form PCT/ISA/210 (patent family annex) (January 2015)

**REFERENCES CITED IN THE DESCRIPTION**

**Patent documents cited in the description**

• JP 2022104737 A